# EUROPEAN PATENT SPECIFICATION

(11) **EP 3 950 408 B1**
(45) Date of publication and mention of the grant of the patent: **05.04.2023**
(21) Application number: 21177751.1
(22) Date of filing: 04.06.2021
(51) Int. Cl.: B60L 53/00

(54) **CHARGING CONNECTOR**
LADESTECKER
CONNECTEUR DE CHARGEUR

(30) Priority: 06.08.2020 JP 2020133987
(43) Date of publication of application: 09.02.2022
(73) Proprietor: Japan Aviation Electronics Industry, Limited, Tokyo 150-0043 (JP)
(72) Inventor: YANAGI, Satoshi, Tokyo, 150-0043 (JP); KUGO, Kazuki, Tokyo, 150-0043 (JP)
(74) Representative: Prüfer & Partner mbB Patentanwälte · Rechtsanwälte

(56) References cited:
- EP-A1- 3 118 941

## Description

### BACKGROUND OF THE INVENTION:

This invention relates to a charging connector.

An example of a charging connector mateable with an inlet is disclosed in JP 2017-27824 A (Patent Document 1).

As shown in Fig. 17, a charging connector 90 of Patent Document 1 is provided with a locking lever 910, a release button 920 and a locking spring 930. The locking lever 910 has a locking portion 912 and a rear-end portion 914 and is movable in a seesaw manner. The release button 920 has a jaw portion 922 and an operation portion 924 and is movable in a seesaw manner. The locking lever 910 and the release button 920 are arranged to work together. In detail, the jaw portion 922 of the release button 920 is located downward of the rear-end portion 914 of the locking lever 910 in an up-down direction and is in contact with a lower surface of the rear-end portion 914. The locking spring 930 acts on the locking lever 910 so that the locking portion 912 is positioned in a locked position.

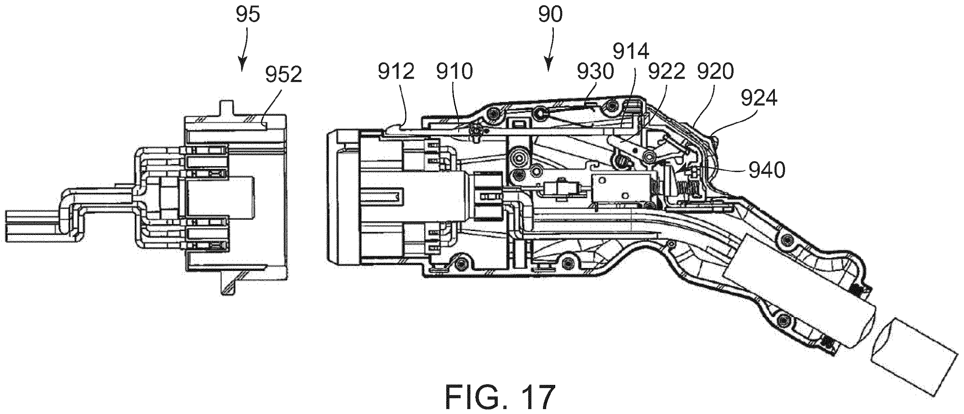

As understood from Fig. 17, when the charging connector 90 and an inlet 95 are mated with each other, the locking portion 912 of the locking lever 910 is engaged with a locked portion 952 of the inlet 95, and the locking portion 912 and the locked portion 952 are brought into a locked state. At that time, the locking portion 912 is positioned in the locked position owing to a reaction force of the locking spring 930.

As understood from Fig. 17, upon pressing the operation portion 924 of the release button 920 down in the up-down direction, the jaw portion 922 is moved upward. The jaw portion 922 presses the rear-end portion 914 of the locking lever 910 up in the up-down direction. At the same time, the locking portion 912 of the locking lever 910 is moved downward in the up-down direction. As a result, the locked state of the locking portion 912 and the locked portion 952 is released.

The charging connector 90 is further provided with an operation regulating mechanism 940 which regulates an operation of the release button 920. The operation regulating mechanism 940 regulates downward movement of the operation portion 924 of the release button 920 so as to prevent the locked state from being released accidentally. When the regulation by the operation regulating mechanism 940 is released, an operation to press the operation portion 924 of the release button 920 down is allowed.

In the charging connector 90 of Patent Document 1, the operation regulating mechanism 940 regulates movement of the release button 920. At that time, although the movement of the release button 920 is regulated, the release button 920 is not completely immovable. In other words, the release button 920 is slightly movable even when the movement thereof is regulated by the operation regulating mechanism 940. This is because manufacturing variations are considered.

As described above, in the charging connector 90, the jaw portion 922 of the release button 920 is in contact with the rear-end portion 914 of the locking lever 910. Accordingly, the movement of the release button 920 is immediately transmitted to the locking lever 910. As a result, the charging connector 90 has a problem that the locking portion 912 of the locking lever 910 might be moved downward in the up-down direction even when the movement of the release button 920 is regulated.

EP3118941 discloses a connector includes: a locking lever; a switching mechanism that includes a switch configured to generate a signal capable of establishing conduction between the connector and an inlet when operated by the locking lever and is arranged so as to be movable between a first position and a second position; an outer shell configured to accommodate the locking lever and the switch therein; a cover including a cover-side protrusion and being arranged on the outer shell so that at least a part of the cover is exposed to an outside of the outer shell; and a movable-plate-side protrusion arranged in the switching mechanism and configured to retain the switching mechanism at the first position through contact with the cover-side protrusion. The locking lever includes an operating portion capable of operating the switch.

### SUMMARY OF THE INVENTION:

It is an object of the present invention to provide a charging connector in which a locking lever is not moved even when a release button is moved provided that the release button is regulated by an operation regulating mechanism.

One aspect of the present invention provides a charging connector which is mateable with an inlet having a locked portion along a front-rear direction. The charging connector comprises a first axis portion, a second axis portion, a locking lever, a button member and an operation regulating mechanism. The locking lever has a locking portion and a rear-end portion. The locking lever is movable in a seesaw manner around the first axis portion. The first axis portion is located between the locking portion and the rear-end portion. The locking portion is movable between a first initial position and a first lower limit position. When the inlet and the charging connector are mated with each other, the locking portion and the locked portion lock a mated state of the inlet and the charging connector. The button member has an operation portion, an upper jaw portion, a lower jaw portion and a regulated portion. The button member is movable in a seesaw manner around the second axis portion. The second axis portion is located between the lower jaw portion and the operation portion. The operation portion is movable between a second initial position and a second lower limit position in an up-down direction perpendicular to the front-rear direction. In the up-down direction, the upper jaw portion is located upward of the lower jaw portion at least in part. In the up-down direction, the rear-end portion of the locking lever is located between the upper jaw portion and the lower jaw portion. The upper jaw portion has resilience. The regulated portion is provided downward of the operation portion. The operation regulating mechanism comprises a regulating portion movable between a regulation position and a release position. When the regulating portion is positioned in the regulation position, the regulating portion regulates downward movement of the regulated portion beyond the regulating portion to regulate movement of the operation portion to the second lower limit position. When the regulating portion is positioned in the release position, the regulating portion allows the downward movement of regulated portion to allow the movement of the operation portion to the second lower limit position. If the operation portion is pushed down when the regulating portion is positioned in the release position, the lower jaw portion is brought into abutment with the rear-end portion and pushes up the rear-end portion to move the locking portion from the first initial position toward the first lower position. Even in a state that the regulated portion is in contact with the regulating portion when the regulating portion is positioned in the regulation position, the lower jaw portion is positioned apart from the rear-end portion of the locking lever.

In the charging connector, even in a state that the regulated portion is in contact with the regulating portion when the regulating portion is positioned in the regulated position, the lower jaw portion is positioned apart from the rear-end portion of locking lever. In other words, when the regulating portion is positioned in the regulated position, the button member and the locking lever are apart from each other. Accordingly, even if the button member is moved when the regulating portion is positioned in the regulated position, the locking lever is never moved.

Moreover, in the charging connector, the upper jaw portion of the button member has resilience. Accordingly, in a case where a release operation cannot be performed due to a malfunction of the button member, inserting a release jig into the charging connector and moving the release jig are allowed to move the locking lever without moving the whole of the button member.

An appreciation of the objectives of the present invention and a more complete understanding of its structure may be had by studying the following description of the preferred embodiment and by referring to the accompanying drawings.

### BRIEF DESCRIPTION OF THE DRAWINGS:

Fig. 1 is a front, perspective view showing a charging connector according to an embodiment of the present invention. The charging connector is attached to an end of a cable.
Fig. 2 is a rear, perspective view showing the charging connector of Fig. 1.
Fig. 3 is an exploded, perspective view showing the charging connector of Fig. 1. A locking spring is not shown.
Fig. 4 is a front view showing the charging connector of Fig. 1.
Fig. 5 is a cross-sectional view showing the charging connector of Fig. 4, taken along line A-A. For a plug, a side thereof is shown. The cable is not shown.
Fig. 6 is a side view showing a locking mechanism assembly included in the charging connector of Fig. 3.
Fig. 7 is a plan view showing the locking mechanism assembly of Fig. 6.
Fig. 8 is an exploded, perspective view showing the locking mechanism assembly of Fig. 6.
Fig. 9 is another exploded, perspective view showing the locking mechanism assembly of Fig. 6.
Fig. 10 is an exploded, perspective view showing a button member included in the locking mechanism assembly of Fig. 6.
Fig. 11 is a right-side view showing the button member of Fig. 10.
Fig. 12 is a left-side view showing the button member of Fig. 10.
Fig. 13 is a bottom view showing the button member of Fig. 10.
Fig. 14 is a cross-sectional view showing the locking mechanism assembly of Fig. 7, taken along line B-B. A regulating portion is positioned in a release position.
Fig. 15 is another cross-sectional view showing the locking mechanism assembly of Fig. 7, taken along line B-B. The regulating portion is positioned in a regulated position.
Fig. 16 is a side view showing the locking mechanism assembly of Fig. 6. A resilient portion is in a state that it is resiliently deformed.
Fig. 17 is a cross-sectional view showing a charging connector and an inlet which are disclosed in Patent Document 1. The charging connector and the inlet are not mated with each other.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DESCRIPTION OF PREFERRED EMBODIMENTS:

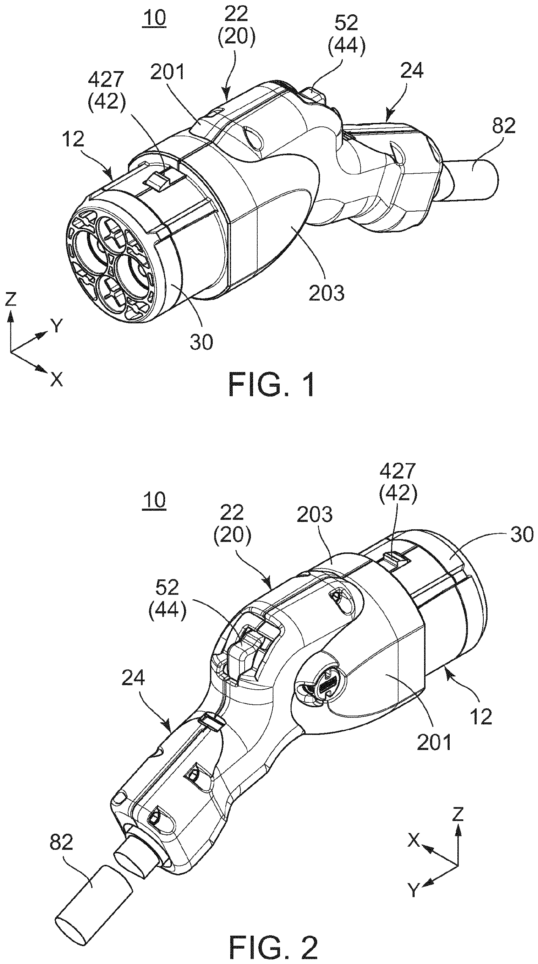

Referring to Figs. 1 and 2, a charging connector 10 according to an embodiment of the present invention is attached to an end of a cable 82. The charging connector 10 is a connector mateable with an inlet (not shown), which has a locked portion (not shown), along a front-rear direction. The charging connector 10 has a mating portion 12 at a front end thereof in the front-rear direction. In the present embodiment, the front-rear direction is a Y-direction. A negative Y-direction is directed forward while a positive Y-direction is directed rearward.

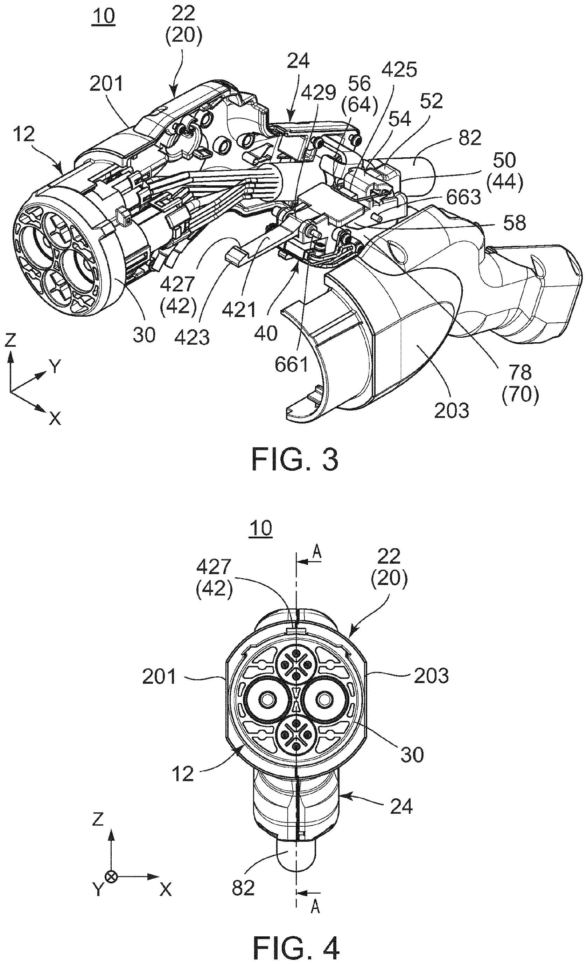

As shown in Fig. 3, the charging connector 10 is provided with a body 20, a plug 30 and a locking mechanism assembly 40. The body 20 consists of a pair of shells 201 and 203 and has a trunk portion 22 and a grip portion 24. The plug 30 and the locking mechanism assembly 40 are held by the body 20.

As shown in Figs 1 to 3, the plug 30 is located at a front-end portion of the body 20 and exposed outside the body 20 in part. The plug 30 forms the mating portion 12 in part. Also, the body 20 forms the mating portion 12 in part. A front end of the plug 30 forms the front end of the charging connector 10. As shown in Fig. 3, the plug 30 is connected to a plurality of leads included in the cable 82.

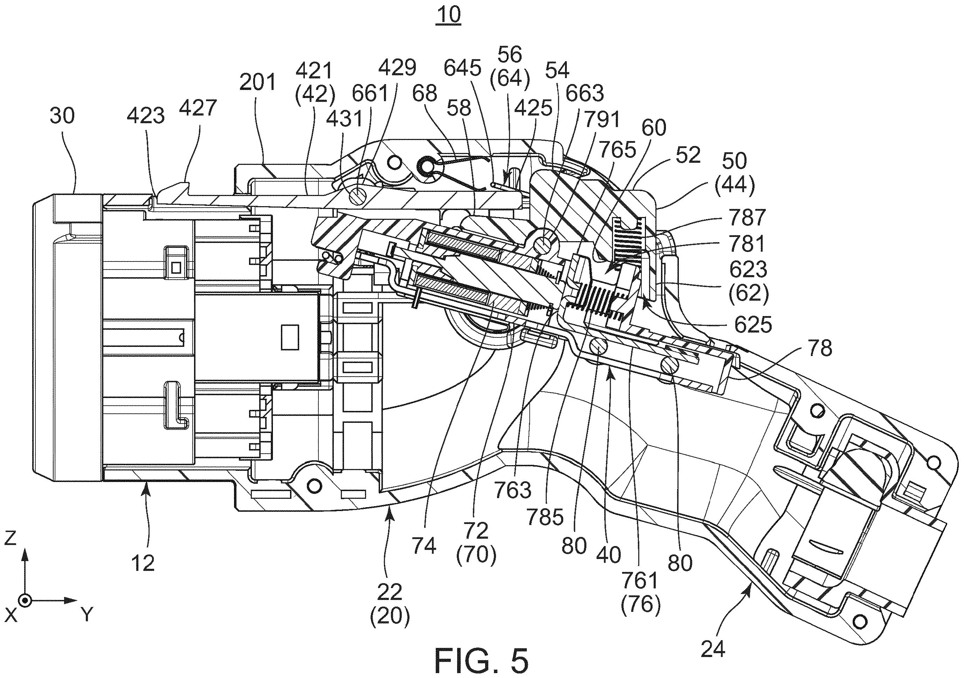

As understood from Figs. 4 and 5, the locking mechanism assembly 40 is located rearward of the plug 30 in the front-rear direction. Moreover, the locking mechanism assembly 40 is located at an upper portion of the body 20. The charging connector 10 is further provided with a locking spring (a first spring) 68. The locking spring 68 is provided in the body 20 and located upward of the locking mechanism assembly 40 in an up-down direction. In the present embodiment, the up-down direction is a direction perpendicular to the front-rear direction, or a Z-direction. A positive Z-direction is directed upward while a negative Z-direction is directed downward.

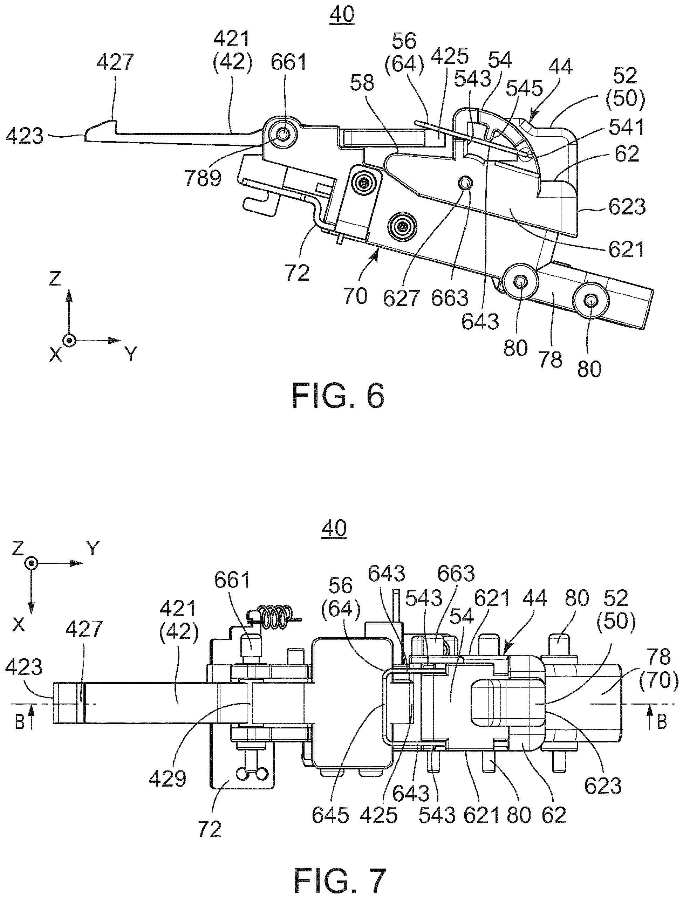

Referring to Figs. 6 and 7, the locking mechanism assembly 40 is provided with a locking lever 42, a button member (a release button) 44, an operation regulating mechanism 70, a first axis portion 661 and a second axis portion 663. In other words, the charging connector 10 is provided with the locking lever 42, the button member 44, the operation regulating mechanism 70, the first axis portion 661 and the second axis portion 663. The locking lever 42 and the button member 44 are attached to the operation regulating mechanism 70 using the first axis portion 661 and the second axis portion 663, respectively.

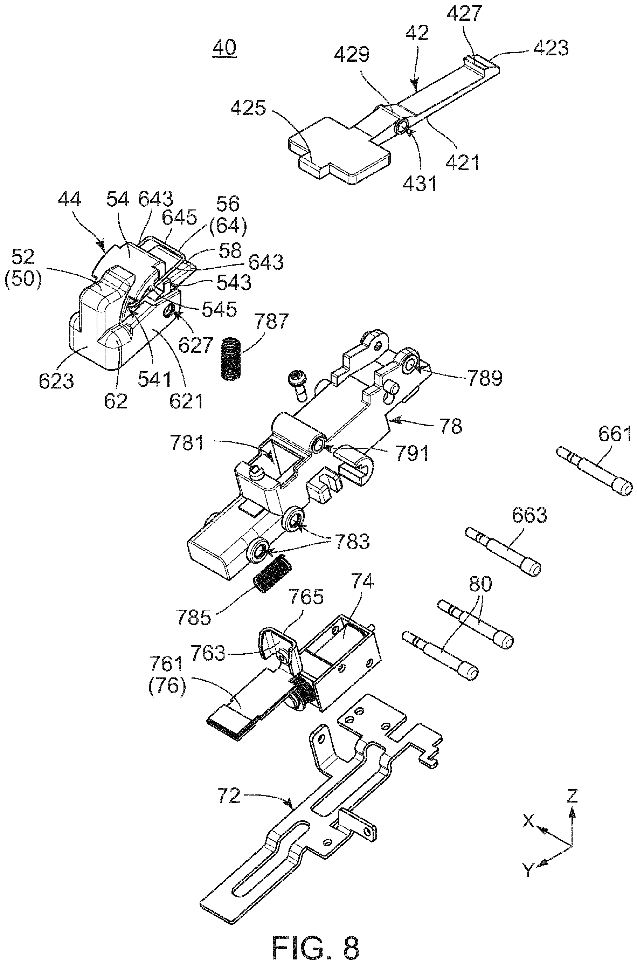

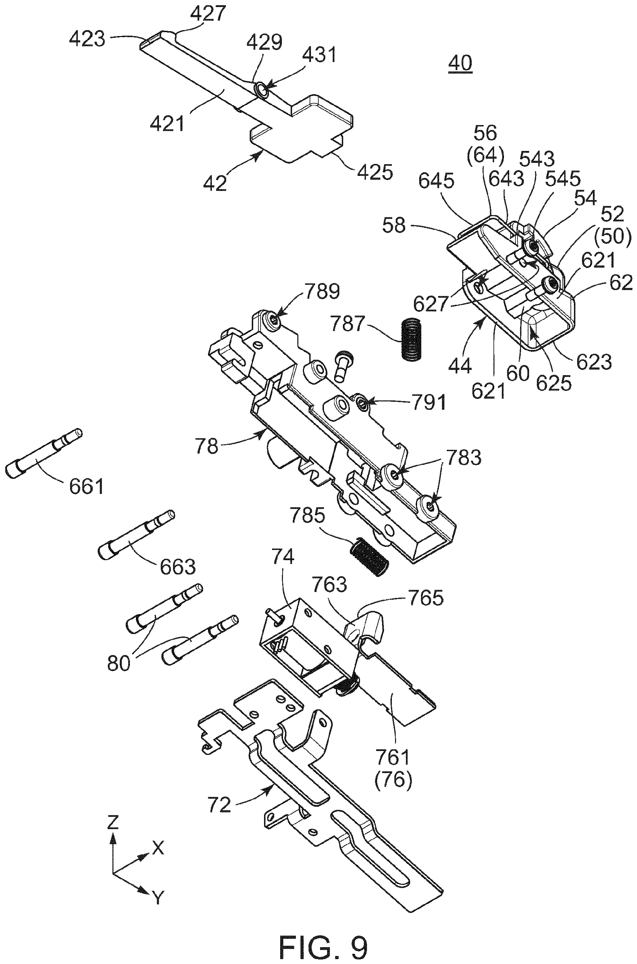

Referring to Figs. 8 and 9, the locking lever 42 has an arm portion 421 extending in the front-rear direction. The arm portion 421 has a front-end portion 423 and a rear-end portion 425. To the front-end portion 423 of the arm portion 421, a locking portion 427 is provided. Thus, the locking lever 42 has the locking portion 427 and the rear-end portion 425.

As shown in Figs. 8 and 9, a bearing portion 429 is provided in the vicinity of the middle of the arm portion 421 in the front-rear direction. In the bearing portion 429, an axis hole 431 is formed to pierce the bearing portion 429 in a lateral direction perpendicular to both of the front-rear direction and the up-down direction. The axis hole 431 allows the first axis portion 661 to be inserted therein. In the present embodiment, the lateral direction is an X-direction.

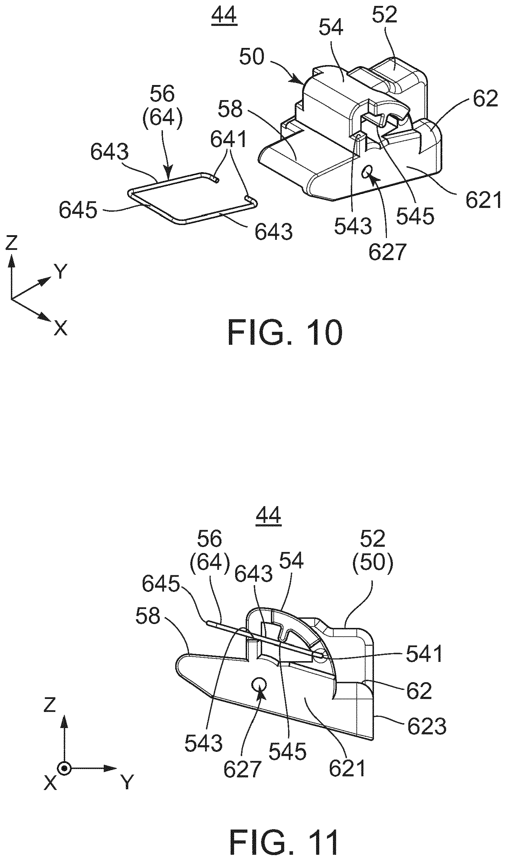

As shown in Figs. 8 and 9, the button member 44 has an operation portion 52, a guide portion 54, an upper jaw portion 56, a lower jaw portion 58, a regulated portion 60 and a cover portion 62. As shown in Fig. 10, in the present embodiment, the button member 44 is provided with a button main portion 50 and a resilient portion 64.

As shown in Figs. 10 to 13, the button main portion 50 is provided with the operation portion 52, the guide portion 54, the lower jaw portion 58, the regulated portion 60 and the cover portion 62. The resilient portion 64 consists of a resilient body which is distinct and separated from the button main portion 50. In the present embodiment, the resilient portion 64 is made of a metal wire. The resilient portion 64 is attached to the button main portion 50 to function as the upper jaw portion 56. In other words, in the present embodiment, the upper jaw portion 56 consists of the resilient body distinct and separated from the button main portion 50 and is attached to the button main portion 50. However, the present invention is not limited thereto. The upper jaw portion 56 may be integrally provided to the button main portion 50. In other words, the button member 44 may be formed as a single member. In that case, the upper jaw portion 56 may be formed by only a part located forward of the guide portion 54 in the front-rear direction. Nevertheless, when the resilient portion 64 is formed to be distinct and separated from the button main portion 50, it is easy to realize a structure which enables an emergency detaching operation. It should be noted that the emergency detaching operation is an operation to move the locking lever 42 using a release jig (not shown) in a case where a malfunction of the button member 44 occurs and where the locking lever 42 in a locked state cannot be moved to a release position.

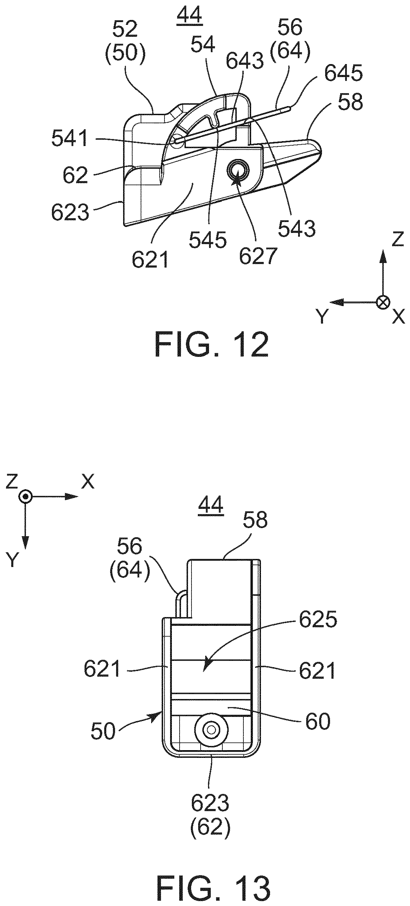

As shown in Figs. 10 to 12, the guide portion 54 is located at the middle portion of the button main portion 50 in the front-rear direction. Moreover, the guide portion 54 is located at an upper portion of the button main portion 50. The operation portion 52 is located rearward of the guide portion 54 in the front-rear direction. In the lateral direction, a size of the operation portion 52 is smaller than that of the guide portion 54. The lower jaw portion 58 extends frontward-diagonally upward from a lower portion of the guide portion 54. The cover portion 62 has side board portions 621 extending downward from the lower jaw portion 58 and the guide portion 54 and a rear board portion 623 extending downward from the operation portion 52. The cover portion 62 defines an internal space 625. As shown in Fig. 13, the regulated portion 60 is provided to a lower side of the operation portion 52 and located in the internal space 625.

As shown in Figs. 10 to 13, the guide portion 54 has a shape of a generally quarter circle when viewed along the lateral direction. The guide portion 54 is formed with two mounting holes 541. Moreover, the guide portion 54 is provided with a pair of first supporting members 543 and a pair of second supporting members 545. Here, each of the mounting holes 541 is a bottomed hole extending inward in the lateral direction. In other words, the button member 44 is provided with two mounting holes 541 which do not communicate with the internal space 625. Since the mounting holes 541 do not communicate with the internal space 625, no water enters the internal space 625 via the mounting holes 541.

As shown in Fig. 10, the resilient portion 64 (the upper jaw portion 56) has two attaching portions 641, two arm portions 643 extending from the attaching portions 641, respectively, and a coupling portion 645 coupling the arm portions 643 to each other. Each of the attaching portions 641 extends inward in the lateral direction from one end of the arm portion 643 corresponding thereto. The coupling portion 645 couples the other ends of the arm portions 643 to each other. The coupling portion 645 has a certain length in the lateral direction to realize a stable contact with a rear-end portion 425 of the locking lever 42. Moreover, the two arm portions 643 can have both of strength necessary for a regular operation and resilience for allowing the emergency detaching operation. In addition, a size of each of the arm portions 643 is significantly smaller than that of the coupling portion 645 in the lateral direction so that insertion and operation of the release jig (not shown) can be easily performed in the emergency detaching operation.

As shown in Figs. 11 and 12, when the resilient portion 64 is attached to the button main portion 50, each of the attaching portions 641 is inserted into and accommodated in the mounting hole 541 corresponding thereto at least in part. The arm portions 643 are supported by the first supporting members 543, respectively, from beneath in the up-down direction. Moreover, the arm portions 643 are supported by the second supporting members 545, respectively, from above in the up-down direction. Thus, the resilient portion 64 is attached to the button main portion 50 to keep a certain position. In the front-rear direction, a position of each of the first supporting members 543 and a position of each of the second supporting members 545 are different from each other. Accordingly, the resilient portion 64 is easy to be resiliently deformed so that the coupling portion 645 is moved downward rather than upward. This facilitates the emergency detaching operation.

As shown in Figs. 11 and 12, in a state that the resilient portion 64 is attached to the button main portion 50, the arm portions 643 extend frontward-diagonally upward. The coupling portion 645 is located upward of and apart from the lower jaw portion 58 in the up-down direction. In other words, the upper jaw portion 56 is located upward of and apart from the lower jaw portion 58.

As shown in Figs. 10 to 12, the side board portions 621 of the cover portion 62 are formed with mounting axis holes 627, respectively. Into the mounting axis holes 627, the second axis portion 663 can be inserted.

Referring again to Figs. 8 and 9, the operation regulating mechanism 70 is provided with a base 72, a solenoid 74, a locking plate 76 and a housing 78. The locking plate 76 has a main board portion 761 and a driven portion 763 extending from the main board portion 761 in an intersecting direction intersecting with the main board portion 761. Both side portions of the driven portion 763 in the lateral direction are bent rearward. An upper edge portion 765 of the driven portion 763 functions as a regulating portion 765.

As understood from Figs. 5, 8 and 9, the solenoid 74 is mounted on the base 72. The locking plate 76 is disposed on the base 72 to be located rearward of the solenoid 74. Between the locking plate 76 and the base 72, two pivots 80 are arranged. The solenoid 74 is accommodated in the housing 78. The locking plate 76 is accommodated in the housing 78 in part. The housing 78 is provided with pivot axis holes 783 into which the pivots 80 are inserted. The housing 78 prevents water from reaching the solenoid 74 or the locking plate 76 when the water enters the body 20. This is because the water has possibility of obstructing movement of the solenoid 74 and the locking plate 76 when it reaches the solenoid 74 or the locking plate 76 and is frozen.

As shown in Figs. 5, 8 and 9, the housing 78 is formed with an aperture 781. At least the regulating portion 765 of the locking plate 76 is located outside the housing 78 through the aperture 781. However, the present invention is not limited thereto. The regulating portion 765 may be located inside the housing 78. The position of the regulating portion 765 should be decided according to relation to the regulated portion 60.

As understood from Figs. 5, 8 and 9, in the housing 78, a return spring 785 is disposed rearward of the driven portion 763 of the locking plate 76. The driven portion 763 is located between the solenoid 74 and the return spring 785. The driven portion 763 receives a driving force from the solenoid 74 and a reaction force from the return spring 785. Accordingly, the locking plate 76 is lineally movable on the base 72. Owing to linear movement of the locking plate 76, the regulating portion 765 of the locking plate 76 is movable between a regulation position and the release position. Thus, the operation regulating mechanism 70 is provided with the regulating portion 765 movable between the regulation position and the release position.

As understood from Figs. 5 to 7, the locking lever 42 is attached to the housing 78 using the first axis portion 661. As shown in Figs. 8 and 9, the housing 78 is formed with axis holes 789 which receive the first axis portion 661.

As shown in Figs. 5 and 6, in a state that the locking lever 42 is attached to the housing 78, the first axis portion 661 is located between the locking portion 427 and the rear-end portion 425. In detail, the first axis portion 661 is located between the locking portion 427 and the rear-end portion 425 at least in the front-rear direction. In this state, the locking lever 42 is movable in a seesaw manner around the first axis portion 661. Owing to the seesaw movement of the locking lever 42, the locking portion 427 is movable between a first initial position and a first lower limit position.

As shown in Fig. 5, the locking spring 68 is attached to the shell 201. The locking spring 68 is located upward of the locking lever 42 and in contact with the locking lever 42. And, the locking spring 68 presses the rear-end portion 425 down so that the locking portion 427 is positioned in the first initial position. As understood from Figs. 1 and 2, the locking portion 427 protrudes outside the body 20 at least in part when positioned in the first initial position.

As understood from Figs. 5 to 7, the button member 44 is attached to the housing 78 using the second axis portion 663. As shown in Figs. 8 and 9, the housing 78 is formed with an axis hole 791 which receives the second axis portion 663.

As shown in Figs. 5 and 6, in a state that the button member 44 is attached to the housing 78, the second axis portion 663 is located between the lower jaw portion 58 and the operation portion 52. In detail, the second axis portion 663 is located between the lower jaw portion 58 and the operation portion 52 at least in the front-rear direction. In this state, the button member 44 is movable in a seesaw manner around the second axis portion 663. Owing to the seesaw movement of the button member 44, the operation portion 52 is movable between a second initial position and a second lower limit position in the up-down direction.

As shown in Figs. 5, 8 and 9, the charging connector 10 is further provided with a press-up spring (a second spring) 787. The press-up spring 787 is disposed between the operation portion 52 and the housing 78 in the internal space 625 of the button main portion 50. Moreover, the press-up spring 787 is located rearward of the regulated portion 60 in the front-rear direction. The press-up spring 787 presses the operation portion 52 up with respect to the housing 78 so that the operation portion 52 is positioned in the second initial position.

As shown in Fig. 5, the regulating portion 765 of the locking plate 76 is located in the internal space 625 of the button main portion 50. Accordingly, it can be said that the button main portion 50 defines the internal space 625 which accommodates the regulating portion 765 in part. The cover portion 62 defining the internal space 625 of the button main portion 50 covers the aperture 781 of the housing 78 to prevent the water entering the body 20 of the charging connector 10 from reaching the locking plate 76 through the aperture 781.

As understood from Figs. 5 and 6, the locking lever 42 and the button member 44 are arranged to work together. In detail, the locking lever 42 and the button member 44 overlap with each other in the front-rear direction. In more detail, the rear-end portion 425 of the locking lever 42 is located between the upper jaw portion 56 and the lower jaw portion 58 in the up-down direction. With this structure, the rear-end portion 425 of the locking lever 42 and the upper jaw portion 56 or the lower jaw portion 58 are brought into abutment with each other when the locking lever 42 is moved in the seesaw manner. Therefore, the locking lever 42 and the button member 44 can work together.

As shown in Fig. 6, when no external force is applied on the charging connector 10, the locking portion 427 is positioned in the first initial position while the operation portion 52 of the button member 44 is positioned in the second initial position. At that time, as understood from Figs. 6 and 7, the rear-end portion 425 of the locking lever 42 is apart from both of the upper jaw portion 56 of the button member 44 and the lower jaw portion 58 of the button member 44. In other words, when the locking portion 427 and the button member 44 are positioned in the first initial position and the second initial position, respectively, each of the upper jaw portion 56 and the lower jaw portion 58 is not in contact with the rear-end portion 425 but positioned apart from the rear-end portion 425.

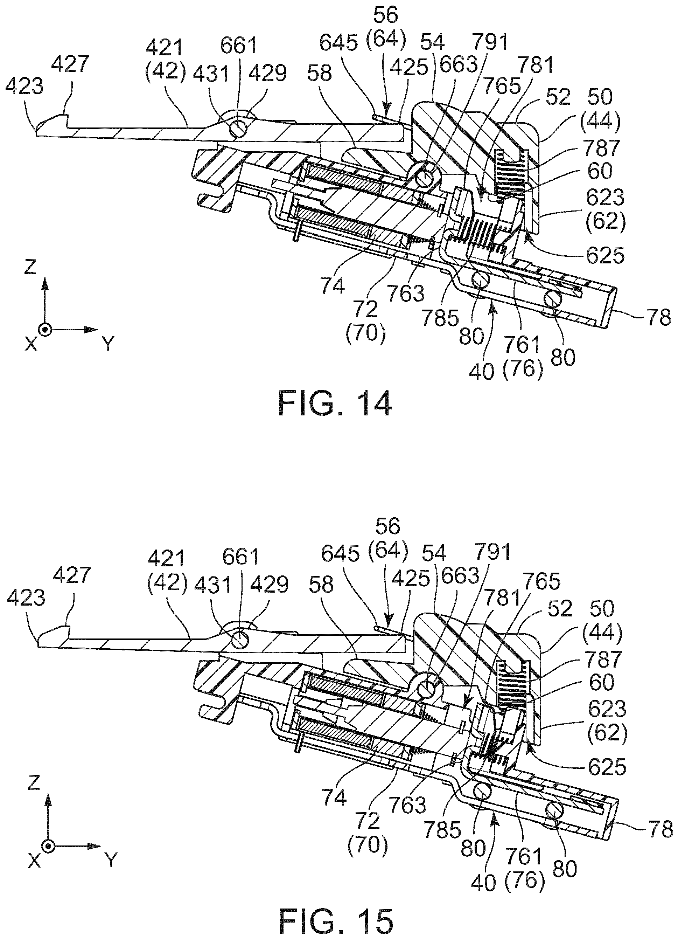

As understood from Figs. 14 and 15, the locking plate 76 of the operation regulating mechanism 70 is movable on the base 72, and the regulating portion 765 is movable between the release position and the regulation position. As shown in Fig. 14, when the regulating portion 765 is positioned in the release position, the regulating portion 765 and the regulated portion 60 are apart from each other in the front-rear direction. In this state, the charging connector 10 is mateable with and detachable from the inlet (not shown).

As understood from Fig. 5, in a mating operation that the charging connector 10 is mated with the inlet (not shown), the locking portion 427 receives a reaction force from the locked portion (not shown) of the inlet and to be pushed down toward the first lower limit position. Thereupon, the rear-end portion 425 of the locking lever 42 is moved upward in the up-down direction against a reaction force of the locking spring 68 and pushes the upper jaw portion 56 up. Then, when the upper jaw portion 56 is moved upward, the operation portion 52 of the button member 44 is moved downward against a reaction force of the press-up spring 787. After that, when the locking portion 427 no longer receives the reaction force from the locked portion, the rear-end portion 425 of the locking lever 42 is moved downward by a reaction force of the locking spring 68. Thus, the locking portion 427 is moved up toward the first initial position to engage with the locked portion. In this way, a mated state that the charging connector 10 and the inlet (not shown) are mated with each other is locked by the locking portion 427 and the locked portion. When it becomes the locked state, the upper jaw portion 56 of the button member 44 receives no force from the rear-end portion 425 so that the operation portion 52 is moved up toward the second initial position by a reaction force of the press-up spring 787. Owing to such a sequence of movements of the operation portion 52, an operator can know the state that the charging connector 10 is mated with the inlet.

As shown in Fig. 15, when the regulating portion 765 is positioned in the regulation position, the regulating portion 765 faces the regulated portion 60. Accordingly, the regulating portion 765 regulates downward movement of the regulated portion 60 beyond the regulating portion 765. In other words, the regulating portion 765 regulates movement of the button member 44 to regulate movement of the operation portion 52 toward the second lower limit position. Thus, the mated state of the charging connector 10 and the inlet is prevented from releasing accidentally.

As shown in Fig. 14, when the regulating portion 765 is moved to the release position, the regulating portion 765 allows the downward movement of the regulated portion 60. This allows the operation portion 52 to be moved to the second lower limit position. When the operation portion 52 is pushed down, the lower jaw portion 58 is moved up by seesaw movement of the button member 44. Then, the lower jaw portion 58 is brought into abutment with the rear-end portion 425 of the locking lever 42 and pushes the rear-end portion 425 up. As a result, the locking lever 42 is moved in a seesaw manner, and the locking portion 427 is moved toward the first lower limit position from the first initial position. Thus, releasing the mated state of the charging connector 10 and the inlet becomes possible.

As shown in Fig. 15, if the operation portion 52 is pushed down when the regulating portion 765 is positioned in the regulation position, the regulated portion 60 is brought into abutment with the regulating portion 765. In the present embodiment, even in a state that the regulated portion 60 is in contact with the regulating portion 765, the lower jaw portion 58 is located apart from the rear-end portion 425 of the locking lever 42. Accordingly, even if the button member 44 is moved by operating the operation portion 52 when the regulating portion 765 is positioned in the regulation position, the locking lever 42 neither work together with the button member 44 nor is moved. Thus, it is possible to prevent occurrence of malfunction owing to accidental movement of the lock lever 42 in the locked state.

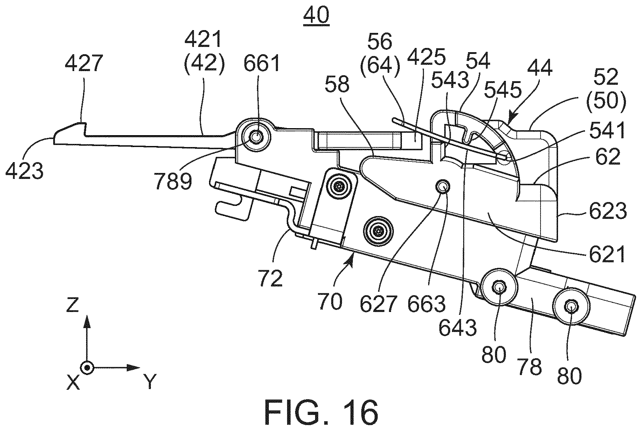

In the charging connector 10, there might be a situation that the operation portion 52 of the button member 44 cannot be moved to the second lower limit position by something wrong. Under such a situation, it is desirable that the locked state can be released by inserting the release jig (not shown) into the charging connector 10 and directly moving the locking lever 42 by the release jig. In the present embodiment, the upper jaw portion 56 has the resilience. Accordingly, as shown in Fig. 16, it is possible to deform the upper jaw portion 56 resiliently without moving the button main portion 50. Therefore, the rear-end portion 425 of the locking lever 42 can be directly pushed up using the release jig, and the locked state can be released without operating the button member 44.

Although the specific explanation about the present invention is made above with reference to the embodiments, the present invention is not limited thereto but susceptible of various modifications and alternative forms without departing from the spirit of the invention. For example, each of the locking lever 42 and the button member 44 may have a simpler shape or a more complicated shape without being limited to the shape of the aforementioned embodiment.

While there has been described what is believed to be the preferred embodiment of the invention, those skilled in the art will recognize that other and further modifications may be made thereto without departing from the spirit of the invention, and it is intended to claim all such embodiments that fall within the true scope of the invention.

## Claims

1. A charging connector (10) which is mateable with an inlet having a locked portion along a front-rear direction (Y), wherein:
the charging connector comprises a first axis portion (661), a second axis portion (663), a locking lever (42), a button member (44) and an operation regulating mechanism (70);
the locking lever has a locking portion (427) and a rear-end portion (425);
the locking lever is movable in a seesaw manner around the first axis portion;
the first axis portion is located between the locking portion and the rear-end portion;
the locking portion is movable between a first initial position and a first lower limit position;
when the inlet and the charging connector are mated with each other, the locking portion and the locked portion lock a mated state of the inlet and the charging connector;
the button member has an operation portion (52), an upper jaw portion (56), a lower jaw portion (58) and a regulated portion (60);
the button member is movable in a seesaw manner around the second axis portion;
the second axis portion is located between the lower jaw portion and the operation portion;
the operation portion is movable between a second initial position and a second lower limit position in an up-down direction (Z) perpendicular to the front-rear direction;
in the up-down direction, the upper jaw portion is located upward of the lower jaw portion at least in part;
in the up-down direction, the rear-end portion of the locking lever is located between the upper jaw portion and the lower jaw portion;
the upper jaw portion has resilience;
the regulated portion is provided downward of the operation portion;
the operation regulating mechanism comprises a regulating portion (765) movable between a regulation position and a release position;
when the regulating portion is positioned in the regulation position, the regulating portion regulates downward movement of the regulated portion beyond the regulating portion to regulate movement of the operation portion to the second lower limit position;
when the regulating portion is positioned in the release position, the regulating portion allows the downward movement of regulated portion to allow the movement of the operation portion to the second lower limit position;
if the operation portion is pushed down when the regulating portion is positioned in the release position, the lower jaw portion is brought into abutment with the rear-end portion and pushes up the rear-end portion to move the locking portion from the first initial position toward the first lower position; and
even in a state that the regulated portion is in contact with the regulating portion when the regulating portion is positioned in the regulation position, the lower jaw portion is positioned apart from the rear-end portion of the locking lever.

2. The charging connector as recited in claim 1, wherein:
the button member comprises a button main portion (50);
the operation portion, the lower jaw portion and the regulated portion are provided to the button main portion; and
the upper jaw portion is made of a resilient body which is distinct and apart from the button main portion and attached to the button main portion.

3. The charging connector as recited in claim 1 or claim 2, wherein if the locking portion is pushed down by receiving a reaction force from the locked portion when the charging connector and the inlet are mated with each other, the rear-end portion pushes up the upper jaw portion upward, so that the operation portion of the button member is moved downward.

4. The charging connector as recited in claim 3, wherein when the locking portion is positioned in the first initial position, the upper jaw portion is positioned apart from the rear-end portion.

5. The charging connector as recited in any one of claims 1 to 4, wherein:
the charging connector further comprises a first spring (68) and a second spring (787);
the first spring presses down the rear-end portion so that the locking portion is positioned in the first initial position; and
the second spring presses up the operation portion so that the operation portion is positioned in the second initial position.

6. The charging connector as recited in any one of claims 1 to 5, wherein the upper jaw portion has two attaching portions, two arm portions extending from the attaching portions, respectively, and a coupling portion (645) coupling the arm portions to each other.

7. The charging connector as recited in claim 6, wherein:
the button main portion defines an internal space accommodating the regulating portion in part;
the button member is formed with two mounting holes which do not communicate with the internal space; and
the attaching portions are received by the mounting holes, respectively.

## Patentansprüche

1. Ladestecker (10), der mit einer Zuleitung, die entlang einer vorne-hinten-Richtung (Y) einen verriegelten Abschnitt hat, steckbar ist, wobei:
der Ladestecker einen ersten Achsenabschnitt (661), einen zweiten Achsenabschnitt (663), einen Verriegelungshebel (42), ein Knopfelement (44) und einen Betätigungsregulierungsmechanismus (70) aufweist;
der Verriegelungshebel einen Verriegelungsabschnitt (427) und einen hinteres-Ende-Abschnitt (425) hat;
der Verriegelungshebel in einer wippenden Weise um den ersten Achsenabschnitt beweglich ist;
der erste Achsenabschnitt sich zwischen dem Verriegelungsabschnitt und dem hinteres-Ende-Abschnitt befindet;
der Verriegelungsabschnitt zwischen einer ersten Ausgangsposition und einer ersten unteren Grenzposition beweglich ist;
wenn die Zuleitung und der Ladestecker miteinander gepaart sind, der Verriegelungsabschnitt und der verriegelte Abschnitt in einem gepaarten Zustand der Zuleitung und des Ladesteckers verriegeln;
das Knopfelement einen Betätigungsabschnitt (52), einen oberen Klauenabschnitt (56), einen unteren Klauenabschnitt (58) und einen regulierten Abschnitt (60) hat;
das Knopfelement in einer wippenden Weise um den zweiten Achsenabschnitt beweglich ist;
der zweite Achsenabschnitt sich zwischen dem unteren Klauenabschnitt und dem Betätigungsabschnitt befindet;
der Betätigungsabschnitt in einer auf-ab-Richtung (Z) senkrecht zu der vornehinten-Richtung zwischen einer zweiten Ausgangsposition und einer zweiten unteren Grenzposition beweglich ist;
der obere Klauenabschnitt sich in der auf-ab-Richtung zumindest teilweise oberhalb von dem unteren Klauenabschnitt befindet;
der hinteres-Ende-Abschnitt des Verriegelungshebels sich in der auf-ab-Richtung zwischen dem oberen Klauenabschnitt und dem unteren Klauenabschnitt befindet;
der untere Klauenabschnitt eine Spannkraft hat;
der regulierte Abschnitt unterhalb von dem Betätigungsabschnitt vorgesehen ist;
der Betätigungsregulierungsmechanismus einen Regulierungsabschnitt (765) aufweist, der zwischen einer Regulierungsposition und einer gelösten Position beweglich ist;
wenn der Regulierungsabschnitt in der Regulierungsposition positioniert ist, der Regulierungsabschnitt eine Abwärtsbewegung des regulierten Abschnitts über den Regulierungsabschnitt hinaus reguliert, um eine Bewegung des Betätigungsabschnitts in die zweite untere Grenzposition zu regulieren;
wenn der Regulierungsabschnitt in der gelösten Position positioniert ist, der Regulierungsabschnitt die Abwärtsbewegung eines regulierten Abschnitts ermöglicht, um die Bewegung des Betätigungsabschnitts in die zweite untere Grenzposition zu ermöglichen;
falls der Betätigungsabschnitt herunter gedrückt wird wenn der Regulierungsabschnitt in der gelösten Position positioniert ist, der untere Klauenabschnitt zum Anstoßen mit dem hinteres-Ende-Abschnitt gebracht wird und den hinteres-Ende-Abschnitt hoch drückt, um den Verriegelungsabschnitt von der ersten Ausgangsposition zu der ersten unteren Position hin zu bewegen; und
selbst in einem Zustand, in dem, wenn der Regulierungsabschnitt in der Regulierungsposition positioniert ist, der regulierte Abschnitt mit dem Regulierungsabschnitt in Kontakt ist, der untere Klauenabschnitt neben dem hinteres-Ende-Abschnitt des Verriegelungshebels positioniert ist.

2. Ladestecker, wie in Anspruch 1 vorgetragen, wobei:
das Knopfelement einen Knopf-Hauptabschnitt (50) aufweist;
der Betätigungsabschnitt, der untere Klauenabschnitt und der regulierte Abschnitt an dem Knopf-Hauptabschnitt vorgesehen sind; und
der untere Klauenabschnitt aus einem federnden Körper hergestellt ist, der eigenständig ist, und neben dem Knopf-Hauptabschnitt und an dem Knopf-Hauptabschnitt angebracht ist.

3. Ladestecker, wie in Anspruch 1 oder Anspruch 2 vorgetragen, wobei, falls der Verriegelungsabschnitt durch Aufnehmen einer Reaktionskraft von dem verriegelten Abschnitt herunter gedrückt wird wenn der Ladestecker und die Zuleitung miteinander gepaart sind, der hinteres-Ende-Abschnitt den oberen Klauenabschnitt nach oben hoch drückt, sodass der Betätigungsabschnitt des Knopfelements nach unten bewegt wird.

4. Ladestecker, wie in Anspruch 3 vorgetragen, wobei, wenn der Verriegelungsabschnitt in der ersten Ausgangsposition positioniert ist, der obere Klauenabschnitt neben dem hinteres-Ende-Abschnitt positioniert ist.

5. Ladestecker, wie in einem der Ansprüche 1 bis 4 vorgetragen, wobei:
der Ladestecker ferner eine erste Feder (68) und eine zweite Feder (787) aufweist;
die erste Feder den hinteres-Ende-Abschnitt herunter drückt, sodass der Verriegelungsabschnitt in der ersten Ausgangsposition positioniert ist; und
die zweite Feder den Betätigungsabschnitt hoch drückt, sodass der Betätigungsabschnitt in der zweiten Ausgangsposition positioniert ist.

6. Ladestecker, wie in einem der Ansprüche 1 bis 5 vorgetragen, wobei der obere Klauenabschnitt zwei Befestigungsabschnitte, zwei Armabschnitte, die sich jeweils von den Befestigungsabschnitten erstrecken, und einen Kopplungsabschnitt (645) hat, der die Armabschnitte miteinander gekoppelt.

7. Ladestecker, wie in Anspruch 6 vorgetragen, wobei:
der Knopf-Hauptabschnitt einen inneren Raum definiert, der den Regulierungsabschnitt teilweise aufnimmt;
das Knopfelement mit zwei Montagelöchern gebildet ist, die nicht mit dem inneren Raum kommunizieren; und
die Befestigungsabschnitte jeweils durch die Montagelöcher aufgenommen sind.

## Revendications

1. Connecteur de chargeur (10) qui peut être conjugué à une prise comportant une partie verrouillée suivant une direction longitudinale (Y), dans lequel :
le connecteur de chargeur comprend une première partie d'axe (661), une seconde partie d'axe (663), un levier de verrouillage (42), un élément de bouton (44) et un mécanisme de régulation de commande (70) ;
le levier de verrouillage comporte une partie de verrouillage (427) et une partie d'extrémité arrière (425) ;
le levier de verrouillage peut être déplacé à la manière d'une bascule autour de la première partie d'axe ;
la première partie d'axe est située entre la partie de verrouillage et la partie d'extrémité arrière ;
la partie de verrouillage peut être déplacée entre une première position initiale et une première position de limite inférieure ;
lorsque la prise et le connecteur de chargeur sont couplés l'un à l'autre, la partie de verrouillage et la partie verrouillée verrouillent un état couplé de la prise et du connecteur de chargeur ;
l'élément de bouton comporte une partie de commande (52), une partie de mâchoire supérieure (56), une partie de mâchoire inférieure (58) et une partie régulée (60) ;
l'élément de bouton peut être déplacé à la manière d'une bascule autour de la seconde partie d'axe ;
la seconde partie d'axe est située entre la partie de mâchoire inférieure et la partie de commande ;
la partie de commande peut être déplacée entre une seconde position initiale et une seconde position de limite inférieure suivant une direction verticale (Z) perpendiculaire à la direction longitudinale ;
dans la direction verticale, la partie de mâchoire supérieure est située au moins en partie vers le haut de la partie de mâchoire inférieure ;
dans la direction verticale, la partie d'extrémité arrière du levier de verrouillage est située entre la partie de mâchoire supérieure et la partie de mâchoire inférieure ;
la partie de mâchoire supérieure présente un certaine élasticité ;
la partie régulée est agencée vers le bas de la partie de commande ;
le mécanisme de régulation de commande comprend une partie de régulation (765) pouvant se déplacer entre une position de régulation et une position de libération ;
lorsque la partie de régulation est placée dans la position de régulation, la partie de régulation régule le mouvement vers le bas de la partie régulée au-delà de la partie de régulation afin de réguler le mouvement de la partie de commande vers la seconde position de limite inférieure ;
lorsque la partie de régulation est placée dans la position de libération, la partie de régulation permet le mouvement vers le bas de la partie régulée afin de permettre le mouvement de la partie de commande vers la seconde position de limite inférieure ;
si la partie de commande est poussée vers le bas lorsque la partie de régulation est placée dans la position de libération, la partie de mâchoire inférieure est mise en butée sur la partie d'extrémité arrière et repousse la partie d'extrémité arrière afin de déplacer la partie de verrouillage à partir de la première position initiale vers la première position inférieure et
même dans un état tel que la partie régulée est en contact avec la partie de régulation lorsque la partie de régulation est placée dans la position de régulation, la partie de mâchoire inférieure est placée à l'écart de la partie d'extrémité arrière du levier de verrouillage.

2. Connecteur de chargeur selon la revendication 1, dans lequel :
l'élément de bouton comprend une partie principale de bouton (50) ;
la partie de commande, la partie de mâchoire inférieure et la partie régulée sont formées sur la partie principale de bouton ; et
la partie de mâchoire supérieure est réalisée en un corps élastique qui est distinct et à l'écart de la partie principale de bouton et est fixé sur la partie principale de bouton.

3. Connecteur de chargeur selon la revendication 1 ou 2, dans lequel, si la partie de verrouillage est abaissée en recevant un effort de réaction de la partie verrouillée lorsque le connecteur de chargeur et la prise sont couplés l'un à l'autre, la partie d'extrémité arrière déplace la partie de mâchoire supérieure vers le haut, de telle sorte que la partie de commande de l'élément de bouton est déplacée vers le bas.

4. Connecteur de chargeur selon la revendication 3, dans lequel, lorsque la partie de verrouillage est placée dans la première position initiale, la partie de mâchoire supérieure est placée à l'écart de la partie d'extrémité arrière.

5. Connecteur de chargeur selon l'une quelconque des revendications 1 à 4, dans lequel :
le connecteur de chargeur comprend, en outre, un premier ressort (68) et un second ressort (787) ;
le premier ressort applique vers le bas la partie d'extrémité arrière de telle sorte que la partie de verrouillage est placée dans la première position initiale ; et
le second ressort applique vers le haut la partie de commande de telle sorte que la partie de commande est placée dans la seconde position initiale.

6. Connecteur de chargeur selon l'une quelconque des revendications 1 à 5, dans lequel la partie de mâchoire supérieure comporte deux parties de fixation, deux parties de bras s'étendant respectivement à partir des parties de fixation et une partie de couplage (645) couplant les parties de bras l'une à l'autre.

7. Connecteur de chargeur selon la revendication 6, dans lequel :
la partie principale de bouton définit un espace interne recevant en partie la partie de régulation ;
l'élément de bouton comporte deux orifices de montage qui ne communiquent pas avec l'espace interne ; et
les parties de fixation sont reçues respectivement par les orifices de montage.
